# EUROPÄISCHE PATENTSCHRIFT

(11) **EP 2 544 920 B1**
(45) Veröffentlichungstag und Bekanntmachung des Hinweises auf die Patenterteilung: **30.04.2014**
(21) Anmeldenummer: 11711268.0
(22) Anmeldetag: 10.03.2011
(51) Int. Cl.: B60Q 5/00

(54) **DRUCKSENSORANORDNUNG SOWIE HUPEINRICHTUNG FÜR EIN FAHRZEUG**
PRESSURE SENSOR ASSEMBLY AND HORN FOR A VEHICLE
AGENCEMENT DE CAPTEURS DE PRESSION ET DISPOSITIF AVERTISSEUR SONORE POUR UN VÉHICULE

(30) Priorität: 11.03.2010 DE 102010011046
(43) Veröffentlichungstag der Anmeldung: 16.01.2013
(73) Patentinhaber: Johnson Matthey Catalysts (Germany) GmbH, 96257 Redwitz (DE)
(72) Erfinder: VAN DER LINDEN, Klaus, 96257 Redwitz (DE); RÜTTEL, Martin, 96271 Grub am Forst (DE); KLUMP, Stefan, 96215 Lichtenfels (DE)
(74) Vertreter: FDST Patentanwälte
(86) Internationale Anmeldenummer: PCT/EP2011/001190
(87) Internationale Veröffentlichungsnummer: WO 2011/110352

(56) Entgegenhaltungen:
- DE-A1-102005 013 202
- DE-A1-102005 058 856
- DE-U1- 29 822 832
- US-A- 5 303 952
- US-A- 5 398 962

## Beschreibung

Die Erfindung betrifft eine Drucksensoranordnung, insbesondere einen großflächigen Taster, speziell für eine Hupe eines Fahrzeuges mit den Merkmalen des Oberbegriffs des Anspruchs 1 sowie eine Hupeinrichtung für ein Fahrzeug mit einer solchen Drucksensoranordnung.

Bei Kraftfahrzeugen ist üblicherweise im Lenkrad ein Taster, also ein drucksensibles Schaltelement für die Betätigung einer Hupe integriert. Bei Betätigung des Tasters wird ein Hupsignal bereitgestellt und die Hupe wird aktiviert. Der Taster ist üblicherweise in einem so genannten Lenkradtopf in der Regel zusammen mit einem Airbag integriert. Zum Auslösen des Tasters ist eine Stellbewegung in Tastrichtung erforderlich. Um dies zu ermöglichen, ist eine Abdeckung für den Taster beweglich innerhalb einer Verkleidung für das Lenkrad gehalten. Die Abdeckung bildet eine Tastfläche zur Betätigung des Tasters. Der Taster ist üblicherweise zentral in der Mitte des Lenkrads angeordnet. Das Verkleidungselement ist ein Designelement. Die bewegliche Lagerung der Abdeckung erfordert, dass die Abdeckung als ein separates Element innerhalb der Verkleidung ausgebildet ist. Dies ist aus Designgründen oftmals störend, da hierdurch keine ebenen durchgehenden Flächen bereitgestellt werden können.

Aus der US 5,303,952 A ist eine Drucksensoranordnung gemäß den Merkmalen des Oberbegriffs des Anspruchs 1 sowie eine Hupeinrichtung mit einer derartigen Drucksensoranordnung zu entnehmen. Zum Betätigen der Hupe sind Piezoelemente auf einem Trägermodul angeordnet, welches vollflächig auf einem Lenkradträger angeordnet ist.

Aus der DE 10 2005 013 202 A1 ist ein Lenkradschalter zu entnehmen, bei dem zur Ausbildung von einzelnen Tastflächen druckempfindliche Bereiche vorgesehen sind, die an einer flächig auf einer piezoelektrischen Folie aufliegenden Blende ausgebildet sind. Diese Tastflächen-Anordnung liegt schließlich insgesamt auf einem skelettartigen Träger des Lenkrads auf.

Aus der US 5,398,962 A ist eine in einem Lenkradtopf integrierte Hupeinrichtung zu entnehmen. Die Betätigung der Hupe erfolgt über einen Kraftsensor. Zur Vermeidung einer Falschauslösung ist eine spezielle elektronische Schaltung vorgesehen.

Ausgehend hiervon liegt der Erfindung die Aufgabe zugrunde, eine zumindest weitgehend weglose Hupenauslösung zu ermöglichen, die sicher und zuverlässig arbeitet sowie einfach und kostengünstig herzustellen sowie zu montieren ist.

Die Aufgabe wird gemäß der Erfindung gelöst durch eine Drucksensoranordnung, insbesondere ein großflächiger Taster speziell für eine Hupe sowie durch eine Hupeinrichtung mit einer solchen Drucksensoranordnung und einer von dieser angesteuerten Hupe. Die Drucksensoranordnung weist eine Leiterplattenanordnung mit zumindest einer Leiterplatte auf. Zur Druckerfassung ist auf der Leiterplatte eine Anzahl, also ein und vorzugsweise mehrere, mit Elektroden versehene Piezoelemente angeordnet. Die Elektroden sind jeweils mit einer Leiterbahn leitend verbunden sind. Die verteilt angeordneten Piezoelemente bilden gemeinsam eine großflächige drucksensitive Fläche zur Erzeugung eines gemeinsamen Schaftsignals, insbesondere eines Hupsignals. Die von den Piezoelementen erzeugten Einzelsignale werden gemeinsam zur Erzeugung des gemeinsamen Signals ausgewertet, wobei bevorzugt bereits ein Einzelsignal zur Erzeugung des gemeinsamen Schaftsignals führt.

Bevorzugt weist die Leiterplattenanordnung genau eine Leiterplatte auf. Alternativ ist sie in wenige, vorzugsweise lediglich zwei Leiterplattensegmente unterteilt. Auf zumindest einem Leiterplattensegment sind zweckdienlicherweise mehrere Piezoelemente angeordnet.

Zur Bereitstellung einer zumindest weitgehend weglosen Hupanordnung ist daher die Verwendung von Piezoelementen als Schaltelemente vorgesehen. Unter Piezoelementen werden allgemein Bauteile verstanden, die unter Ausnutzung des piezoelektrischen Effekts bei einer durch die Druckbelastung hervorgerufenen mechanischen Verformung des Piezoelements ein elektrisches Signal erzeugen, welches als Schaltsignal herangezogen und beispielsweise zu einer zentralen Steuereinheit weitergeleitet wird.

Das Piezoelement weist ein piezoelektrisch aktives Material auf, insbesondere eine Piezokeramik, vorzugsweise eine PZT-Keramik (Blei-Zirkonat-Titan) oder eine bleifreie Piezokeramik. Auf diese Piezokeramik sind an gegenüberliegenden Flachseiten Elektroden aufgebracht, beispielsweise aufgesputtert, aufgedampft, etc., über die die bei einer Verformung der Piezokeramik erzeugten Ladungsträger über eine geeignete Kontaktierung abgegriffen werden. Das Piezoelement selbst ist insgesamt ein extrem dünnes Bauteil. Die Piezokeramik weist beispielsweise eine Dicke im Bereich von 100 bis 500µm auf und die aufgebrachten Elektroden weisen je nach Art der Elektroden eine Schichtdicke im Bereich beispielsweise von 100nm bis 50 µm auf.

Zwar ist bei den Piezoelementen zur Erzeugung eines Signals eine Verformung des Piezoelements erforderlich. Jedoch liegt die hierfür erforderliche Verformung im µm-Bereich und ist damit im Vergleich zu herkömmlichen Tastern, die eine Stellbewegung eines Schaltglieds erfordern, um ein Vielfaches geringer. Eine manuelle Druckbetätigung eines piezoelektrischen Tasters wird daher als wegloses Schalten empfunden. Von besonderem Vorteil ist, dass zum Auslösen nahezu keine Stellbewegung erforderlich ist und die erforderliche geringfügige Verformung des Piezoelements ohne weiteres über eine elastische Verformung der Verkleidung des Lenkrads ausgeübt werden kann. Es ist daher nicht erforderlich, dass eine Taster-Abdeckung innerhalb einer Verkleidung (des Lenkrads) lose und beweglich integriert ist.

Im montierten Endzustand liegt die Leiterplattenanordnung in einem Tastergehäuse ein. Dieses wird bei der Verwendung für eine Hupe in einem Kraftfahrzeug durch den Lenkradtopf des Lenkrads gebildet.

Im Bereich der Piezoelemente ist ein Freiraum zu einem Gehäuseboden des Tastergehäuses ausgebildet. Durch diesen Freiraum ist eine großzügige Verbiegung des Piezoelements ermöglicht, um ein möglichst großes Signal erzeugen zu können. Der Freiraum ist gemäß einer bevorzugten Alternative durch eine Ausbuchtung im Gehäuseboden ausgebildet.

Ergänzend weist die Leiterplatte an ihrer zum Gehäuseboden orientierten Unterseite Abstandselemente auf, mit denen sie sich am Gehäuseboden abstützt. Die zum Gehäuseboden hin orientierte Unterseite ist dadurch vom Gehäuseboden beabstandet und eine Durchbiegung des Piezoelements ist möglich. Zweckdienlicherweise sind die Abstandselemente gebildet durch separate Abstandshalter, die an der Unterseite der Leiterplatte angebracht, beispielsweise angeklebt sind. Diese Abstandshalter bestehen aus einem elastischen Material, wie beispielsweise Silikongummi oder vergleichbare Materialien. Durch die Wahl von unterschiedlichen Materialien kann eine Anpassung an die jeweiligen Einbauerfordernisse erfolgen.

Neben der Ermöglichung einer besseren Durchbiegung dienen diese Abstandselemente auch zur akustischen Entkopplung zum Tastergehäuse hin. Damit wird beispielsweise ein versehentliches Auslösen der Leiterplattenanordnung infolge von (Körper-) Schallschwingungen vermieden.

Da Hupen insbesondere in Gefahrsituationen zuverlässig und schnell betätigbar sein müssen, weisen diese üblicherweise einen großflächigen Taster auf. Beispielsweise ist die gesamte Abdeckung für das zentrale Mittenteil eines Lenkrads, der so genannte Lenkradtopf, von dem die Lenkradspeichen ausgehen, als Tasterfläche oder Betätigungsfläche zur Hupauslösung vorgesehen.

Um eine zuverlässige und sichere Auslösung zu gewährleisten, ist daher vorzugsweise vorgesehen, dass die gesamte Leiterplattenanordnung großflächig ausgebildet ist und insbesondere an die Geometrie oder Kontur des Tastergehäuses, also insbesondere des Lenkradtopfes angepasst ist und über die gesamte Tasterfläche verteilt ist. Um eine zuverlässige Hupauslösung zu gewährleisten, selbst wenn eine Betätigung nicht im Zentrum sondern randseitig an der Tastfläche erfolgt, sind über die Fläche mehrere Piezoelemente insbesondere gleichmäßig verteilt angeordnet. Im Hinblick auf eine möglichst einfache Herstellung und Montage sind diese bevorzugt auf einer einzigen großflächigen Leiterplatte verteilt angeordnet, mit dieser also integral verbunden. Die Elektroden sind mit zugeordneten Leiterbahnen der Leiterplatte elektrisch verbunden. Bei der Leiterplattenanordnung handelt es sich daher um ein vorgefertigtes elektromechanisches Bauteil, bei dem die Piezoelemente bereits integriert und kontaktiert sind und welches lediglich noch mit dem Bordnetz des Kraftfahrzeugs über eine geeignete Kontaktstelle verbunden werden muss. Hier kann auf übliche, an sich bekannte und erprobte Kontakt- und Anschlusstechnologien für den Anschluss von Leiterplatten zurückgegriffen werden.

Gemäß einer bevorzugten Ausgestaltung weist die Leiterplatte an den Positionen der Piezoelemente Kontaktflächen auf, auf denen jeweils das jeweilige Piezoelement mit seiner einen Elektrode flächig aufgebracht ist. Bei den Kontaktflächen handelt es sich insbesondere um eine metallisierte Oberfläche der Leiterplatte. Die Piezoelemente sind auf diesen Kontaktflächen beispielsweise mittels eines Leitklebers aufgeklebt. Die Kontaktflächen münden in eine Leiterbahn, so dass insgesamt eine einfache Kontaktierung der jeweiligen Elektrode erzielt ist.

Zweckdienlicherweise ist die Leiterplattenanordnung insgesamt nach Art eines Kreisrings und bevorzugt nach Art eines Kreisringsegments ausgebildet. Die Leiterplattenanordnung überdeckt hierbei vorzugsweise einen Winkel von mehr als 180° und insbesondere einen Winkel von etwa 270°, so dass in etwa ein Dreiviertelkreis überstrichen wird. Durch diese Ausgestaltung ist ein zentrales Mittenteil freigehalten, in dem beispielsweise der Airbag angeordnet ist.

Über die Leiterplattenanordnung verteilt sind vorzugsweise insgesamt drei Piezoelemente angeordnet, die zueinander zweckdienlicherweise jeweils zumindest etwa den gleichen Winkelabstand aufweisen, also insbesondere an den Spitzen eines gedachten gleichseitigen Dreieckes liegen. Durch eine derartige Anordnung ist ein zuverlässiges Auslösen unabhängig von dem Ort der Betätigung gewährleistet.

Vorzugsweise ist die Leiterplatte als eine flexible, dünne Leiterplattenfolie ausgebildet. Deren Dicke liegt typischerweise im Bereich bis etwa 500µm. Insgesamt ist dadurch der Bauraum für die gesamte Drucksensoranordnung sehr gering gehalten.

Vorzugsweise ist auf der Leiterplatte direkt auch eine Auswerteelektronik integriert, die die von den Piezoelementen abgegebenen Signale auswertet und gegebenenfalls hieraus ein Steuersignal für die Hupe erzeugt.

Um eine möglichst einfache Kontaktierung der Leiterplatte und einen möglichst einfachen Anschluss an das Kraftfahrzeugbordnetz zu ermöglichen, weist die Leiterplatte vorzugsweise ein integriertes Kontaktelement, insbesondere ein Steckerelement auf. Die gesamte Leiterplattenanordnung lässt sich daher beispielsweise über eine einfache Steckverbindung über vorkonfektionierte Stecker mit dem Bordnetz des Kraftfahrzeuges verbinden.

Im Hinblick auf eine vereinfachte Montage aber auch im Hinblick auf eine verbesserte Beweglichkeit der Piezoelemente auf der Leiterplatte ist gemäß einer zweckdienlichen Ausgestaltung die Anordnung von Trennöffnungen in der Leiterplatte im Bereich der Piezoelemente vorgesehen. Die Leiterplatte ist daher im Bereich der Piezoelemente partiell freigeschnitten, indem beispielsweise Trennschlitze, Perforationen oder eine teilweise Freistanzung eingebracht sind. Der Leiterplattenteilbereich im Bereich der Piezoelemente ist daher von der übrigen Leiterplatte teilweise abgetrennt. Insgesamt ist der Leiterplattenteilbereich und damit das gesamte Piezoelement besser beweglich. Auch diese partielle Freischneidung dient darüber hinaus zur Entkopplung von Schallschwingungen.

Bei den Piezoelementen handelt es sich allgemein in der Regel um sehr brüchige Bauteile, die nur zu einem geringen Teil auf Dehnung oder Druck belastbar sind.

Um eine bessere Belastbarkeit zu erzielen, ist gemäß einer bevorzugten Weiterbildung vorgesehen, dass auf die Oberseite des Piezoelements eine Schutzfolie aufgebracht, insbesondere aufgeklebt ist. Die Schutzfolie ist vorzugsweise unter Vorspannung auf das Piezoelement aufgebracht, so dass sie in der Verbindungsebene eine (Druck-) Spannung auf das Piezoelement ausübt. Alternativ oder Ergänzend ist die Schutzfolie elastisch ausgebildet. Hierunter wird ein folienartiges Element verstanden, welches eine in der Regel deutlich höhere Elastizität als die Piezokeramik und das Piezoelement mit den aufgebrachten Elektroden aufweist. Die Dicke der Schutzfolie liegt vorzugsweise im Bereich >100µm und insbesondere im Bereich zwischen 100µm und 500µm. Als Schutzfolie werden beispielsweise handelsübliche Laminierfolien, beispielsweise aus PVC oder einem geeigneten sonstigen thermoplastischen oder beispielsweise duroplastischem Material verwendet. Derartige handelsübliche Laminierfolien weisen üblicherweise eine spezielle Beschichtung auf, die unter Wärmeeinwirkung klebfähig wird und zum Aufkleben auf die Piezoelemente herangezogen wird. Alternativ hierzu kann die Schutzfolie auch durch Auftragen eines geeigneten Lackes erzeugt werden. Schließlich ist in bevorzugter Ausgestaltung vorgesehen, dass als Material für die elastische

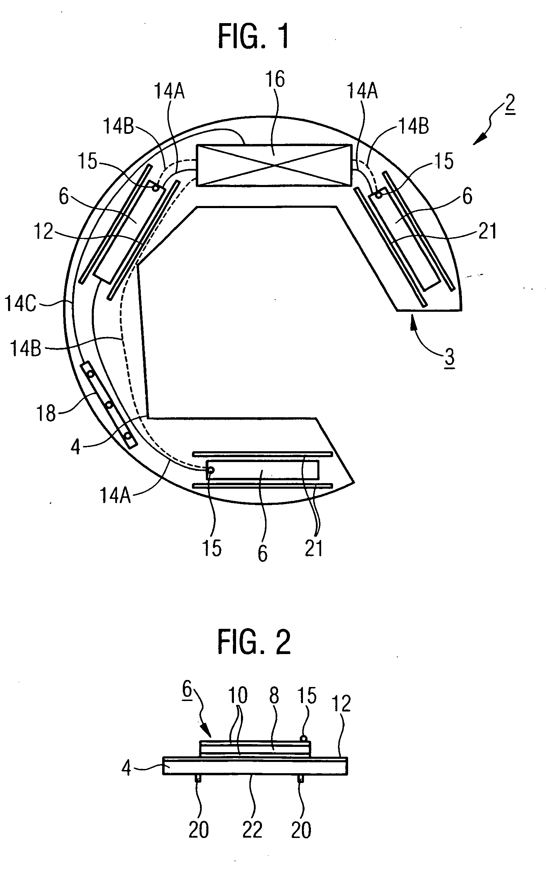

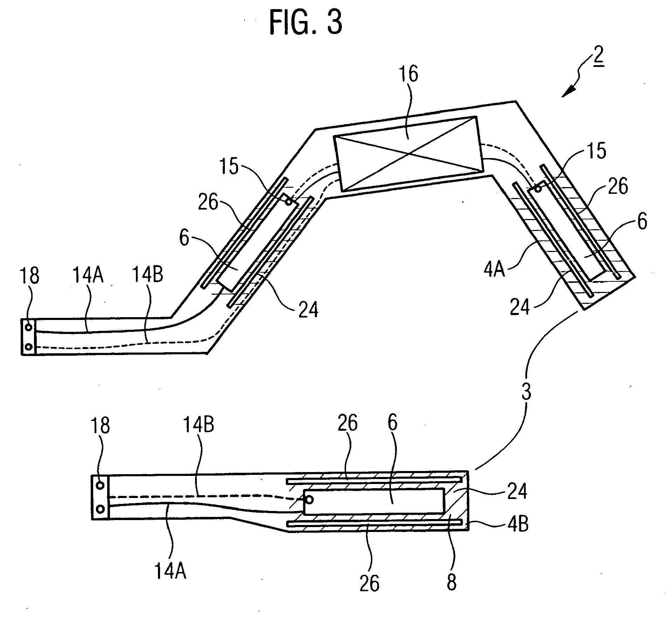

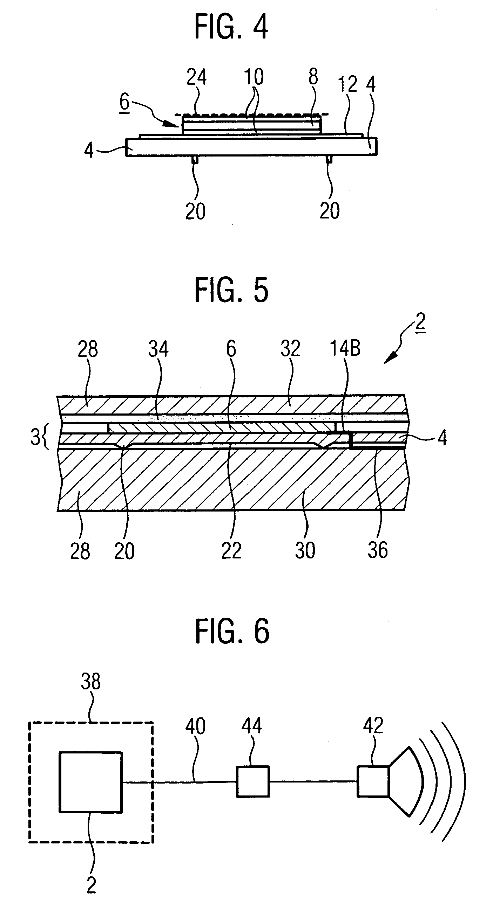

## Patentansprüche

1. Drucksensoranordnung (2), insbesondere für eine Hupe für ein Fahrzeug, umfassend eine Leiterplattenanordnung (3) mit auf einer Leiterplatte (4,4A,4B) angebrachten Leiterbahnen (14A,B,C), wobei zur Ausbildung eines großflächigen Tasters auf der Leiterplatte (4,4A,4B) zur Erfassung eines ausgeübten Druckes eine Anzahl von Piezoelementen (6) mit Elektroden (10) angeordnet ist und die Elektroden (10) jeweils mit einer der Leiterbahnen (14A,B) leitend verbunden sind, wobei die Leiterplattenanordnung (3) in einem Tastergehäuse (28) einliegt,
**dadurch gekennzeichnet,**
**dass** zumindest im Bereich unterhalb der Piezoelemente (6) ein Freiraum (22) zu einem Gehäuseboden (30) ausgebildet ist und wobei die Leiterplatte (4,4A,4B) an ihrer zum Gehäuseboden (30) hin orientierten Unterseite Abstandselemente (20) aus einem elastischen Material wie Silikongummi aufweist.

2. Drucksensoranordnung (2) nach Anspruch 1,
bei der die Leiterplatte (4,4A,4B) an den Positionen der Piezoelemente (6) Kontaktflächen (12) aufweist, auf denen jeweils das Piezoelement (6) mit seiner einen Elektrode (10) flächig aufgebracht ist.

3. Drucksensoranordnung (2) nach Anspruch 1 oder 2,
bei der die Leiterplattenanordnung (3) nach Art eines Kreisringsegments, insbesondere nach Art eines etwa 270° Kreisringsegments ausgebildet ist.

4. Drucksensoranordnung (2) nach einem der vorhergehenden Ansprüche,
bei der die Leiterplatte (4,4A,4B) als eine flexible Leiterplattenfolie ausgebildet ist.

5. Drucksensoranordnung (2) nach einem der vorhergehenden Ansprüche,
bei der die Leiterplatte (4,4A,4B) ein integriertes Kontaktelement, insbesondere ein Steckerelement (18) zum Anschluss der Leiterplattenanordnung (3) aufweist.

6. Drucksensoranordnung (2) nach einem der vorhergehenden Ansprüche,
bei der die Leiterplatte (4,4A,4B) im Bereich der Piezoelemente (6) Trennöffnungen, wie Trennschlitze (21), eine Perforation (26) oder eine Freistanzung aufweist.

7. Drucksensoranordnung (2) nach einem der vorhergehenden Ansprüche,
bei der auf die Oberseite des Piezoelements (6) eine Schutzfolie (24) aufgebracht ist.

8. Drucksensoranordnung (2) nach Anspruch 7,
bei der die Schutzfolie (24) wahlweise keine elektrische Funktion aufweist oder nach Art einer Leiterplatte ausgebildet ist und mit einer Leiterbahn versehen ist, über die die obere Elektrode (10) des jeweiligen Piezoelements (6) kontaktiert, wobei die obere Elektrode über die Schutzfolie mit einer zugeordneten Leiterbahn (14A,B,C) der Leiterplatte (4, 4A, 4B) verbunden ist.

9. Drucksensoranordnung (2) nach einem der Ansprüche 7 bis 10,
bei der die Piezoelemente (6) jeweils Teil eines jeweiligen Biegewandlers sind und die Piezoelemente (6) bezüglich einer neutralen Zone des Biegewandlers asymetrisch und vorzugsweise vollständig außerhalb der neutralen Zone angeordnet sind, wobei hierzu die Dicke der Schutzfolie (24) von der Dicke der Leiterplatte (4,4A,4B) verschieden ist.

10. Drucksensoranordnung (2) nach einem der vorhergehenden Ansprüche,
bei der die Leiterplattenanordnung (3) in einem Tastergehäuse (28) einliegt und im Tastergehäuse (28) weiterführende Leiter integriert sind, die mit den Leiterbahnen der Leiterplatte kontaktiert sind.

11. Drucksensoranordnung (2) nach einem der vorhergehenden Ansprüche mit einem Verkleidungselement (32), welches eine Tastfläche zur Betätigung der Drucksensoranordnung (2) bildet und ortsfest angeordnet ist derart, dass die Betätigung der Drucksensoranordnung (2) allein durch eine elastische Verformung des Verkleidungselements (32) erfolgt.

12. Drucksensoranordnung (2) nach einem der vorhergehenden Ansprüche mit einer Auswerteelektronik (16), die derart ausgebildet ist, dass in Abhängigkeit des vom Piezoelement erhaltenen Signals die Lautstärke einer Hupe gesteuert wird.

13. Drucksensoranordnung (2) nach einem der vorhergehenden Ansprüche, die als vorgefertigtes Einbaumodul ausgebildet ist, wobei
- die Leiterplattenanordnung (3) nach Art eines Kreisringsegments ausgebildet ist und die Piezoelemente (6) verteilt hierauf angeordnet sind,
- auf der Leiterplattenanordnung (3) eine Auswerteelektronik (16) integriert ist, die die Einzelsignale der Piezoelemente auswertet und ein gemeinsames Schaltsignal, insbesondere Hupsignal erzeugt,
- die Leiterplatte (4,4A,4B) ein integriertes Kontaktelement, insbesondere ein Steckerelement (18) zum Anschluss der Leiterplattenanordnung (3) aufweist,
- die Leiterplatte (4,4A,4B) zur Körperschallentkopplung im Bereich der Piezoelemente (6) Trennöffnungen aufweist, wie Trennschlitze (21), eine Perforation (26) oder eine Freistanzung.

14. Hupeinrichtung für ein Fahrzeug mit einer Drucksensoranordnung (2) nach einem der vorhergehenden Ansprüche und einer von dieser angesteuerten Hupe.

15. Hupeinrichtung nach Anspruch 14, bei der die Drucksensoranordnung (2) gemeinsam mit dem Tastergehäuse (28) ein vorgefertigtes Einbaumodul bildet, das in einen Lenkradtopf eines Fahrzeugs einsetzbar ist.

## Claims

1. Pressure sensor arrangement (2), in particular for a horn for a vehicle, comprising a printed circuit board arrangement (3) with conductor tracks (14A, B, C) which are mounted on a printed circuit board (4, 4A, 4B), wherein, in order to form a pushbutton of large surface area, a number of piezo elements (6) comprising electrodes (10) are arranged on the printed circuit board (4, 4A, 4B) for detecting an exerted pressure and the electrodes (10) are each connected in a conductive manner to one of the conductor tracks (14A, B), wherein the printed circuit board arrangement (3) is situated in a pushbutton housing (28), **characterized in that** a free space (22) in relation to a housing floor (30) is formed at least in the region beneath the piezo elements (6), and wherein the printed circuit board (4, 4A, 4B) has, on its bottom face which is oriented towards the housing floor (30), spacer elements (20) which are composed of an elastic material such as silicone rubber.

2. Pressure sensor arrangement (2) according to Claim 1, in which the printed circuit board (4, 4A, 4B) has contact areas (12) in the positions of the piezo elements (6), the respective piezo element (6) being mounted in a flat manner by way of its one electrode (10) on the said contact areas.

3. Pressure sensor arrangement (2) according to Claim 1 or 2, in which the printed circuit board arrangement (3) is formed in the manner of a segment of a ring, in particular in the manner of an approximately 270 degree segment of a ring.

4. Pressure sensor arrangement (2) according to one of the preceding claims, in which the printed circuit board (4, 4A, 4B) is in the form of a flexible printed circuit film.

5. Pressure sensor arrangement (2) according to one of the preceding claims, in which the printed circuit board (4, 4A, 4B) has an integrated contact element, in particular a plug element (18), for connection of the printed circuit board arrangement (3).

6. Pressure sensor arrangement (2) according to one of the preceding claims, in which the printed circuit board (4, 4A, 4B) has separating openings, such as separating slots (21), a perforation (26) or a stamped-free portion, in the region of the piezo elements (6).

7. Pressure sensor arrangement (2) according to one of the preceding claims, in which a protective film (24) is mounted on the top face of the piezo element (6).

8. Pressure sensor arrangement (2) according to Claim 7, in which the protective film (24) selectively does not have an electrical function or is formed in the manner of a printed circuit board and is provided with a conductor track by means of which contact is made with the upper electrode (10) of the respective piezo element (6), wherein the upper electrode is connected to an associated conductor track (14A, B, C) of the printed circuit board (4,4A, 4B) by means of the protective film.

9. Pressure sensor arrangement (2) according to one of Claims 7 to 10, in which the piezo elements (6) for each part of a respective bending transducer and the piezo elements (6) are arranged asymmetrically with respect to a neutral zone of the bending transducer and preferably completely outside the neutral zone, wherein the thickness of the protective film (24) differs from the thickness of the printed circuit board (4, 4A, 4B) for this purpose.

10. Pressure sensor arrangement (2) according to one of the preceding claims, in which the printed circuit board arrangement (3) is situated in a pushbutton housing (28) and conductors which are routed further and with which the conductor tracks of the printed circuit board make contact are integrated in the pushbutton housing (28).

11. Pressure sensor arrangement (2) according to one of the preceding claims, comprising a casing element (32) which forms a touch area for operating the pressure sensor arrangement (2) and is arranged in a stationary manner in such a way that the pressure sensor arrangement (2) is operated solely by elastic deformation of the casing element (32).

12. Pressure sensor arrangement (2) according to one of the preceding claims, comprising an evaluation electronics system (16) which is formed in such a way that the volume of a horn is controlled as a function of the signal which is received by the piezo element.

13. Pressure sensor arrangement (2) according to one of the preceding claims, which is in the form of a prefabricated installation module, wherein
- the printed circuit board arrangement (3) is formed in the manner of a segment of a ring and the piezo elements (6) are arranged in a manner distributed over the said segment of a ring,
- an evaluation electronics system (16) is integrated on the printed circuit board arrangement (3), the said evaluation electronics system evaluating the individual signals from the piezo elements and generating a common switching signal, in particular horn signal,
- the printed circuit board (4, 4A, 4B) has an integrated contact element, in particular a plug element (18) for connection of the printed circuit board arrangement (3),
- the printed circuit board (4, 4A, 4B) has separating openings, such as separating slots (21), a perforation (26) or a stamped-free portion, in the region of the piezo elements (6) for the purpose of decoupling structure-borne noise.

14. Horn device for a vehicle, comprising a pressure sensor arrangement (2) according to one of the preceding claims and a horn which is actuated by the said pressure sensor arrangement.

15. Horn device according to Claim 14, in which the pressure sensor arrangement (2) forms, together with the pushbutton housing (28), a prefabricated installation module which can be inserted into a steering wheel hollow of a vehicle.

## Revendications

1. Arrangement capteur de pression (2), notamment pour un klaxon pour un véhicule, comprenant un arrangement circuit imprimé (3) avec des pistes conductrices (14A, B, C) appliquées sur un circuit imprimé (4, 4A, 4B), une pluralité d'éléments piézoélectriques (6) munis d'électrodes (10) étant disposée pour former un palpeur de grande surface sur le circuit imprimé (4, 4A, 4B) en vue de capter une pression exercée et les électrodes (10) étant respectivement reliées de manière conductrice avec l'une des pistes conductrices (14A, B), l'arrangement circuit imprimé (3) étant introduit dans un boîtier de palpeur (28), **caractérisé en ce qu'**un espace libre (22) vers un fond de boîtier (30) est réalisé au moins dans la zone au-dessous des éléments piézoélectriques (6) et le circuit imprimé (4, 4A, 4B) présente sur son côté inférieur orienté vers le fond de boîtier (30) des éléments d'espacement (20) en un matériau flexible comme le caoutchouc au silicone.

2. Arrangement capteur de pression (2) selon la revendication 1, avec lequel le circuit imprimé (4, 4A, 4B) présente aux endroits des éléments piézoélectriques (6) des surfaces de contact (12) sur lesquelles est à chaque fois appliqué à plat l'élément piézoélectrique (6) avec l'une de ses électrodes (10).

3. Arrangement capteur de pression (2) selon la revendication 1 ou 2, avec lequel l'arrangement circuit imprimé (3) est réalisé à la manière d'un segment de tore, notamment à la manière d'un segment de tore d'environ 270°.

4. Arrangement capteur de pression (2) selon l'une des revendications précédentes, avec lequel le circuit imprimé (4, 4A, 4B) est réalisé sous la forme d'un film de circuit imprimé souple.

5. Arrangement capteur de pression (2) selon l'une des revendications précédentes, avec lequel le circuit imprimé (4, 4A, 4B) présente un élément de contact intégré, notamment un élément enfichable (18) pour le raccordement de l'arrangement circuit imprimé (3).

6. Arrangement capteur de pression (2) selon l'une des revendications précédentes, avec lequel le circuit imprimé (4, 4A, 4B) présente dans la zone des éléments piézoélectriques (6) des ouvertures de séparation, telles que des fentes de séparation (21), une perforation (26) ou une découpe.

7. Arrangement capteur de pression (2) selon l'une des revendications précédentes, avec lequel un film protecteur (24) est appliqué sur le côté supérieur de l'élément piézoélectrique (6).

8. Arrangement capteur de pression (2) selon la revendication 7, avec lequel le film protecteur (24), au choix, ne présente aucune fonction électrique ou est réalisé à la manière d'un circuit imprimé et est muni d'une piste conductrice par le biais de laquelle le contact se fait avec l'électrode supérieure (10) de chaque élément piézoélectrique (6), l'électrode supérieure étant reliée par le biais du film protecteur avec une piste conductrice (14A, B, C) associée du circuit imprimé (4, 4A, 4B).

9. Arrangement capteur de pression (2) selon l'une des revendications 7 à 10, avec lequel les éléments piézoélectriques (6) sont respectivement une partie d'un convertisseur de flexion correspondant et les éléments piézoélectriques (6) sont disposés de manière asymétrique par rapport à une zone neutre du convertisseur de flexion et de préférence totalement en dehors de la zone neutre, l'épaisseur du film protecteur (24) étant à cet effet différente de l'épaisseur du circuit imprimé (4, 4A, 4B).

10. Arrangement capteur de pression (2) selon l'une des revendications précédentes, avec lequel l'arrangement circuit imprimé (3) est introduit dans un boîtier de palpeur (28) et des conducteurs de prolongation qui sont en contact avec les pistes conductrices du circuit imprimé sont intégrés dans le boîtier de palpeur (28).

11. Arrangement capteur de pression (2) selon l'une des revendications précédentes, comprenant un élément d'habillage (32) qui forme une surface de palpage destinée à actionner l'arrangement capteur de pression (2) et est disposé en position fixe de telle sorte que l'actionnement de l'arrangement capteur de pression (2) s'effectue uniquement par une déformation élastique de l'élément d'habillage (32).

12. Arrangement capteur de pression (2) selon l'une des revendications précédentes, comprenant une électronique d'interprétation qui est réalisée de telle sorte que le volume sonore d'un klaxon est commandé en fonction du signal obtenu par l'élément piézoélectrique.

13. Arrangement capteur de pression (2) selon l'une des revendications précédentes, lequel est réalisé sous la forme d'un module à monter préfabriqué, avec lequel
- l'arrangement circuit imprimé (3) est réalisé à la manière d'un segment de tore et les éléments piézoélectriques (6) sont disposés distribués sur celui-ci,
- une électronique d'interprétation (16) est intégrée sur l'arrangement circuit imprimé (3), laquelle interprète les signaux individuels des éléments piézoélectriques et génère un signal de commutation commun, notamment un signal de klaxon,
- le circuit imprimé (4, 4A, 4B) présente un élément de contact intégré, notamment un élément enfichable (18) pour le raccordement de l'arrangement circuit imprimé (3),
- le circuit imprimé (4, 4A, 4B), pour le découplage des bruits de structure, présente dans la zone des éléments piézoélectriques (6) des ouvertures de séparation, telles que des fentes de séparation (21), une perforation (26) ou une découpe.

14. Dispositif klaxon pour un véhicule comprenant un arrangement capteur de pression (2) selon l'une des revendications précédentes et un klaxon commandé par celui-ci.

15. Dispositif klaxon selon la revendication 14, avec lequel l'arrangement capteur de pression (2) forme avec le boîtier de palpeur (28) un module à monter préfabriqué qui peut être logé dans un pot de volant de direction d'un véhicule.
